(19)

Europäisches
Patentamt
European
Patent Office
Office européen
des brevets

(11)　　**EP 2 074 587 B1**

(12)　　　　　　　　　**EUROPEAN PATENT SPECIFICATION**

(45) Date of publication and mention
of the grant of the patent:
**23.02.2011　Bulletin 2011/08**

(21) Application number: **06791225.3**

(22) Date of filing: **10.10.2006**

(51) Int Cl.:
***G06T 7/00*** (2006.01)

(86) International application number:
**PCT/CN2006/002643**

(87) International publication number:
**WO 2008/043204 (17.04.2008 Gazette 2008/16)**

(54) **DEVICE AND METHOD FOR GENERATING A SALIENCY MAP OF A PICTURE**

EINRICHTUNG UND VERFAHREN ZUM ERZEUGEN EINER SALIENZKARTE EINES BILDES

DISPOSITIF ET PROCÉDÉ PERMETTANT DE PRODUIRE UNE CARTE DES TRAITS SAILLANTS
D'UNE IMAGE

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**01.07.2009　Bulletin 2009/27**

(73) Proprietor: **Thomson Licensing
92130 Issy-les-Moulineaux (FR)**

(72) Inventors:
• **GU, Xiaodong
Haidian District
Beijing 100-085 (CN)**
• **QIU, Guoping
Nottingham NG8 1BB (GB)**
• **CHEN, Zhibo
Haidian District
Beijing 100-085 (CN)**
• **CHEN, Quqing
Beijing 100085 (CN)**
• **WANG, Chuanming
Beijing 100085 (CN)**

(74) Representative: **Le Dantec, Claude et al
Technicolor
1-5 rue Jeanne d'Arc
92130 Issy-les-Moulineaux (FR)**

(56) References cited:
**US-A- 5 956 026　　　US-A1- 2004 086 046
US-A1- 2004 086 046　　US-A1- 2005 069 206
US-A1- 2006 182 339**

• ITTI L ET AL: "A Principled Approach to Detecting
Surprising Events in Video" COMPUTER VISION
AND PATTERN RECOGNITION, 2005 IEEE
COMPUTER SOCIETY CONFERENCE ON, IEEE,
PISCATAWAY, NJ, USA, vol. 1, 20 June 2005
(2005-06-20), pages 631-637, XP010817332 ISBN:
978-0-7695-2372-9
• BRUCE ET AL: "Features that draw visual
attention: an information theoretic perspective"
NEUROCOMPUTING, ELSEVIER SCIENCE
PUBLISHERS, AMSTERDAM, NL, vol. 65-66, 1
June 2005 (2005-06-01), pages 125-133,
XP025327985 ISSN: 0925-2312 [retrieved on
2005-06-01]
• GUOPING QIU, MAI YANG, JIWU HUANG:
"Information selective image retrieval" 2ND
EUROPEAN WORKSHOP ON THE INTEGRATION
OF KNOWLEDGE, SEMANTICS AND DIGITAL
MEDIA TECHNOLOGY, 2005, pages 253-256,
XP002547530
• ITTI L ET AL: "A MODEL OF SALIENCY-BASED
VISUAL ATTENTION FOR RAPID SCENE
ANALYSIS" IEEE TRANSACTIONS ON PATTERN
ANALYSIS AND MACHINE INTELLIGENCE, IEEE
SERVICE CENTER, LOS ALAMITOS, CA, US, vol.
20, no. 11, 1 November 1998 (1998-11-01), pages
1254-1259, XP001203933 ISSN: 0162-8828

EP 2 074 587 B1

**Description**

1. Field of the invention

The invention relates to a method and a program for generating a saliency map for a picture of a sequence of pictures.

2. Background of the invention

Salient visual features that attract human attention can be important and powerful cues for video analysis and processing including content-based coding, compression, transmission/rate control, indexing, browsing, display and presentation. State of art methods for detecting and extracting visually salient features mainly handle still pictures. The few methods that handle sequences of pictures first compute spatial and temporal saliency values independently and then combine them in some rather arbitrary manners in order to generate a spatio-temporal saliency value. The spatial saliency values are generally based on the computation, in some heuristic ways, of the contrasts of various visual features (intensity, color, texture, etc.). These methods often assume that temporal saliency value relates to motion. Therefore, they first estimate motion fields using state of art motion estimation methods and then compute the temporal saliency values as some heuristically chosen functions of the estimated motion fields.

The US patent application 2004/086046 discloses the generation of a motion attention model on the basis of motion fields.

The document from Itti at al. entitled "A principled approach to detecting surprising events in video" and published on June 20, 2005 discloses a visual attention model that computes instantaneous low-level surprise at every location in video streams.

These methods have many drawbacks. First, accurate estimation of motion fields is known to be a difficult task. Second, even with accurate motion fields, the relationship between these motion fields and temporal saliency values is not straightforward. Therefore, it is difficult to compute accurate temporal saliency values based on estimated motion fields. Third, assuming spatial and temporal saliency values can be correctly computed, the combination of these values is not straightforward. State-of-art methods often weight temporal and spatial saliency values in an arbitrary manner to get a global value of spatio-temporal saliency value which is often not accurate.

3. Summary of the invention

The object of the invention is to resolve at least one of the drawbacks of the prior art. The invention relates to a method for generating a saliency map for a picture of a sequence of pictures, the picture being divided in blocks of pixels. The method comprises a step for computing a saliency value for each block of the picture. According to the invention, the saliency value equals the self information of the block, the self information depending on the spatial and temporal contexts of the block.

The self information is computed based on the probability of observing the block given its spatial and temporal contexts, the probability being the product of the probability of observing the block given its spatial context and of the probability of observing the block given its temporal context.

The probability of observing the block given its spatial context is estimated as follows:

- associate to each block of the picture a set of K ordered coefficients, with K a positive integer, the set of coefficients being generated by transforming the block by a first predefined orthogonal transform;
- estimate, for each coefficient of order k, its probability distribution within the image, $k \in [1; K]$; and
- compute the probability of observing the block given its spatial context as the product of the probabilities of each coefficient of the set associated to the block.

Preferentially, the first predefined orthogonal transform is a two-dimensional discrete cosine transform.

The probability of observing the block given its temporal context is estimated based on the probability of observing a first volume comprising blocks co-located to the block in the N pictures preceding the picture where the block is located, called current picture, and on the probability of observing a second volume comprising the first volume and the block, with N a positive integer.

The probability of observing the first volume is estimated as follows :

- associate a set of P ordered coefficients to each volume comprising the blocks co-located to one of the block of the current picture in the N pictures preceding the current picture, with P a positive integer, the set of coefficients being generated by transforming the volume by a second predefined orthogonal transform;

- estimate, for each coefficient of order p, its probability distribution, $p \in [1; P]$; and
- compute the probability of observing the first volume as the product of the probabilities of each coefficient of the set associated to the first volume.

The probability of observing the second volume is estimated as follows :

- associate a set of Q ordered coefficients to each volume comprising one of the block of the current picture and the blocks co-located to the block in the N pictures preceding the current picture, with Q a positive integer, the set of coefficients being generated by transforming the volume by the second predefined orthogonal transform;
- estimate, for each coefficient of order q, its probability distribution, $q \in [1; Q]$; and
- compute the probability of observing the second volume as the product of the probabilities of each coefficient of the set associated to the second volume.

Advantageously, the second predefined transform is a three-dimensional discrete cosine transform.
The invention also concerns a computer program product comprising program code instructions for the execution of the steps of the method of saliency maps computation as described above, when the the program is executed on a computer.

4. Brief description of the drawings

Other features and advantages of the invention will appear with the following description of some of its embodiments, this description being made in connection with the drawings in which:

- Figure 1 depicts a sequence of pictures divided into blocks of pixels;
- Figure 2 depicts a flowchart of the method according to the invention;
- Figure 3 depicts a picture of a sequence of pictures;
- Figure 4 depicts a spatio-temporal saliency map of the picture depicted on figure 3
- Figure 5 depicts a temporal saliency map of the picture depicted on figure 3; and
- Figure 6 depicts a spatial saliency map of the picture depicted on figure 3.

5. Detailed description of preferred embodiments

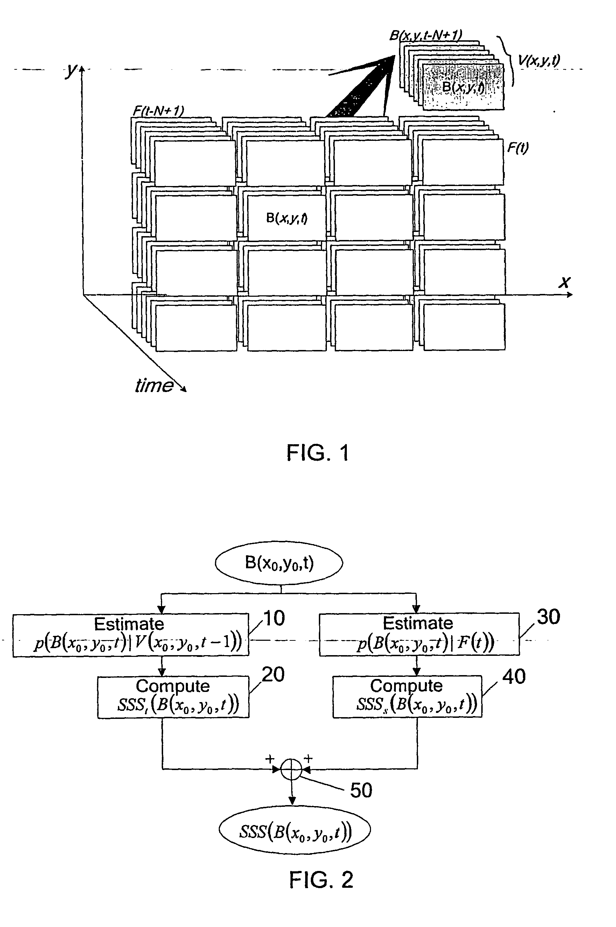

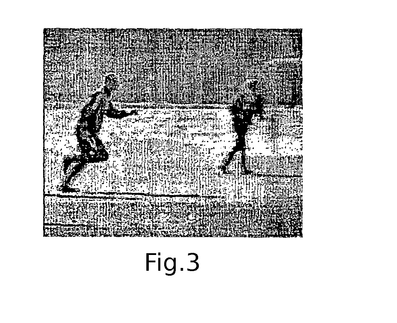

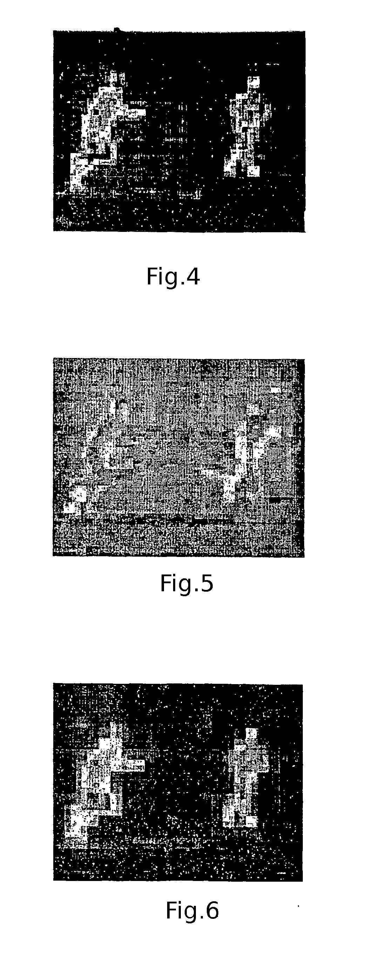

The method according to the invention consists in generating a spatio-temporal saliency map as depicted on figure 4 for a picture depicted on figure 3 of a sequence of pictures. A saliency map is defined as a two-dimensional topographic representation of conspicuity. To this aim, the invention consists in computing a spatio-temporal saliency value for each block of pixels of the picture.
In reference to figure 1, the pictures F(t) of the sequence are divided in blocks of pixels, t being a temporal reference. Each block B(x, y, t) of n by m pixels is called a spatio-temporal event. The event B(x, y, t) is thus a block of pixels located at spatial coordinates (x, y) in the picture F(t). The N co-located blocks from pictures F(t), F(t-1) , ..., F(t-N+1), i.e. the blocks located at the same spatial position (x, y) as B(x, y, t), form a spatio-temporal volume denoted V (x, y, t), where N is a predefined positive integer. A value of 2 frames for N is a good compromise between the accuracy and the complexity of the model. V(x, y, t) records how the block located at (x,y) evolves over time.
The uniqueness of a spatio-temporal event B(x, y, t) is affected by its spatial and temporal contexts. If an event is unique in the spatial context, it is likely that it is salient. Similarly, if it is unique in the temporal context it is also likely to be salient. Both the spatial context and the temporal context influence the uniqueness of a spatio-temporal event. Therefore, according to a first embodiment, a spatio-temporal saliency value $SSS(B(x_0, y_0, t))$ is computed for a given block of pixels $B(x_0, y_0, t)$ in a picture F(t) as the amount of self information $I_{x1}(B(x_0, y_0, t))$ contained in the event $B(x_0, y_0, t)$ given its spatial and temporal contexts. The self information $I_{st}(B(x_0, y_0, t))$ represents the amount of information gained when one learns that $B(x_0, y_0, t)$ has occurred. According to the Shannon's information theory, the amount of self information $I_{st}(B(x_0, y_0, t))$ is defined as a positive and decreasing function f of the probability of occurrence, i.e. $I_{st}(B(x_0, y_0, t)) = f(p(B(x_0, y_0, t)|V(x_0, y_0, t-1),F(t)))$, with f(1)=0, f(0)=infinity, and f(P(x)*P(y))= f(P(x))+f(P(y)) if x and y are two independent events. f is defined as follows: f(x)=log(1/x). According to the Shannon's information theory, the self information $I(x)$ of an event x is thus inversely proportional to the likelihood of observing x.
The spatio-temporal saliency value $SSS(B(x_0, y_0, t))$ associated to the block $B(x_0, y_0, t)$ is therefore defined as follows: $SSS(B(x_0, y_0, t)) = I_{st}(B(x_0, y_0, t)) = -log(p(B(x_0, y_0, t)|V(x_0, y_0, t-1),F(t)))$ . The spatial context of the event $B(x_0, y_0, t)$ is the picture F(t). The temporal context of the event $B(x_0, y_0, t)$ is the volume $V(x_0, y_0, t-1)$, i.e. the set of blocks co-located with the block $B(x_0, y_0, t)$ and located in the N pictures preceding the picture F(t). A block in a picture F(t') is co-located with the block $B(x_0, y_0, t)$ if it is located in F(t') at the same position $(x_0 y_0$ as the block $B(x_0, y_0, t)$ in the picture F(t).

In order to simplify the computation of the saliency values, the spatial and temporal conditions are assumed to be independent. Therefore, the joint conditional probability $p(B(x_0,y_0,t)|V(x_0,y_0,t-1),F(t))$ may be rewritten as follows:

$$p(B(x_0,y_0,t)|V(x_0,y_0,t-1),F(t)) = p(B(x_0,y_0,t)|V(x_0,y_0,t-1)) * p(B(x_0,y_0,t)|F(t))$$

Therefore according to a preferred embodiment depicted on figure 2, the spatio-temporal saliency value associated to a given block $B(x_0, y_0, t)$ is computed as follows:

$$SSS(B(x_0,y_0,t)) = -\log(p(B(x_0,y_0,t)|V(x_0,y_0,t-1))) - \log(p(B(x_0,y_0,t)|F(t)))$$

In figure 2, the represented boxes are purely functional entities, which do not necessarily correspond to physical separated entities. Namely, they could be developed in the form of software, or be implemented in one or several integrated circuits. Let $SSS_t(B(x_0,y_0,t))=-\log(p(B(x_0,y_0,t)|V(x_0,y_0,t-1)))$ and $SSS_s(B(x_0,y_0,t))=-\log(p(B(x_0,y_0,t)|F(t)))$. Advantageously, the two conditional probabilities $p(B(x_0,y_0,t)|V(x_0,y_0,t-1))$ and $p(B(x_0,y_0,t)|F(t))$ of the spatio-temporal event $B(x_0, y_0, t)$ are estimated independently. Unlike previous methods, where the spatial and temporal saliency values are computed independently and then combined together in some arbitrary ways, in the invention the decomposition is natural and derived from the joint spatio-temporal saliency value. It therefore provides more meaningful saliency maps. Besides, by assuming independency of spatial and temporal conditions, spatio-temporal saliency value computation of the event $B(x_0, y_0, t)$ is faster and enables for real time processing.

The temporal conditional probability $p(B(x_0,y_0,t)|V(x_0,y_0,t-1))$ is estimated 10 from the probabilities of the volumes $V(x_0,y_0,t)$ and $V(x_0,y_0,t-1)$. Indeed,

$$p(B(x_0,y_0,t)|V(x_0,y_0,t-1)) = \frac{p(B(x_0,y_0,t),V(x_0,y_0,t-1))}{p(V(x_0,y_0,t-1))} = \frac{p(V(x_0,y_0,t))}{p(V(x_0,y_0,t-1))} \quad \text{(eq1)}.$$

For the purpose of estimating the probabilities $p(V(x_0,y_0,t))$ and $p(V(x_0,y_0,t-1))$, the high dimensional data set $V(x,y,t)$ is projected into an uncorrelated vector space. For example, if N=2, m=n=4, then $V(x,y,t) \in R^{32}$, i.e. to a 32 dimensional vector space. Let $\phi_k$, k = 1, 2, ... K, be a K orthogonal transform vector space basis. If $V(x,y,t) \in R^{32}$, then K=32. The spatio-temporal probability $p(V(x_0,y_0,t))$ is thus estimated as follows:

Step 1: for each position (x,y), compute the coefficients $c_k(x,y,t)$ of $V(x,y,t)$ in the vector space basis as follows: $C_k(x,y,t) = \phi_k V(x,y,t) \; \forall x,y$;
Step 2: estimate the probability distribution $p_k(c)$ of $C_k(x,y,t)$; and
Step 3: compute the probability $p(v(x_0,y_0,t))$ as follows:

$$p(V(x_0,y_0,t)) = \prod_k p_k(\phi_k V(x_0,y_0,t)) \; .$$

The same method is used to estimate the probability $p(V(x_0,y_0,t-1))$.

The temporal saliency value $SSS_t(B(x_0,y_0,t))$ is then computed 20 from $p(V(x_0,y_0,t))$ and $p(V(x_0,y_0,t-1))$ according to (eq1). A temporal saliency map is depicted on figure 5.

The method described above for estimating the probability $p(V(x_0,y_0,t))$ is used to estimate 30 the probability $p(B(x_0,y_0,t))$. The spatial conditional probability $p(B(x_0,y_0,t)|F(t))$ is equivalent to $p(B(x_0,y_0,t))$ since only the current frame F(t) influence the uniqueness of a spatio-temporal event $B(x_0, y_0, t)$. Therefore, to estimate $p(B(x_0,y_0,t)|F(t))$ it is only required to estimate the probability of the spatio-temporal event $B(x_0, y_0, t)$ against all the events in the picture F(t) as follows:

Step 1: for each position (x,y), compute the coefficients $d_k(x,y,t)$ of $B(x,y,t)$ in the vector space basis as follows: $d_k(x,y,t) = \phi_k B(x,y,t) \; \forall x,y$;
Step 2: estimate the probability distribution of $d_k(x,y,t)$, $p_k(d)$; and

Step 3: compute the probability $p(B(x_0,y_0,t))$ as follows: $p(B(x_0,y_0,t)) = \prod_k p_k(\phi_k B(x_0,y_0,t))$.

Preferentially, a 2D-DCT (discrete cosine transform) is used to compute the probability $p(B(x_0,y_0,t))$. Each 4x4 blocks $B(x,y,t)$ in a current picture $F(t)$ is transformed (step 1) in a 16-D vector $(d_0(x,y,t), d_1(x,y,t), ...., d_k(x,y,t))$. The probability distribution $p_k(d)$ is estimated (step 2) within the picture by computing an histogram in each dimension k. Finally, the multiple probability $p(B(x_0,y_0,t))$ is derived (step 3) based on these estimated distributions as the product of the probabilities $P_k(\phi_k B(x_0,y_0,t))$ of each coefficient $d_k(x,y,t)$. The same method is applied to compute the probabilities $p(V(x_0,y_0,t))$ and $p(V(x_0,y_0,t-1))$. However, in this case a 3D DCT is applied instead of a 2D DCT. The method therefore enables for real time processing at a rate of more than 30 pictures per second for CIF format pictures. Besides, since the mode is based on information theory, it is more meaningful than state of art methods based on statistics and heuristics. For example, if the spatio-temporal saliency value of one block is 1 and the spatio-temporal saliency value of another block is 2, then the first block is about twice important than the second one in the same situation. This conclusion cannot be drawn with spatio-temporal saliency maps derived with state of art methods.

The spatial saliency value $SSS_s(B(x_0,y_0,t))$ is then computed 40 from the probability $p(B(x_0,y_0,t))$ as follows: $SSS_s(B(x_0,y_0,t))=-log(p(B(x_0,y_0,t)))$. A spatial saliency map is depicted on figure 6.

The global saliency value $SSS(B(x_0,y_0,t))$ is finally computed 50 as the sum of the temporal and spatial saliency values.

The saliency maps generated for the picture of a sequence of pictures can advantageously help video processing and analysis including content-based coding, compression, transmission/rate control, picture indexing, browsing, display and video quality estimation.

## Claims

1. Method for generating a saliency map for a current picture of a sequence of pictures, said current picture being divided in blocks of pixels, comprising a step (10, 20, 30, 40, 50) for computing a saliency value for each block of said picture **characterized in that** the saliency value is computed (10, 20, 30, 40, 50) according to the following equation:

$$SSS(B(x_0,y_0,t)) = -\log(p(B(x_0,y_0,t)|V(x_0,y_0,t-1))) - \log(p(B(x_0,y_0,t)|F(t)))$$

where: - $SSS(B(x_0,y_0,t))$ is the spatio-temporal saliency value of current block $B(x_0,y_0,t)$;

- $p(B(x_0,y_0,t)|V(x_0,y_0,t-1))$ is the probability of observing said block given its temporal context $V(x_0,y_0,t-1)$; and
- $p(B(x_0,y_0,t)|F(t))$ is the probability of observing said block given its spatial context $F(t)$

wherein the probability of observing said block given its spatial context is estimated (30) as follows:

- associate to each block of said picture a set of K ordered coefficients, with K a positive integer, said set of coefficients being generated by transforming said block by a first predefined orthogonal transform;
- estimate, for each coefficient of order k, its probability distribution within said image, $k \in [1; K]$; and
- compute the probability of observing said block given its spatial context as the product of the probabilities of each coefficient of the set associated to said block and

wherein the probability of observing said block given its temporal context is estimated (10) based on the probability of observing a first volume comprising blocks co-located to said block in the N pictures preceding the picture where said block is located, called current picture, and on the probability of observing a second volume comprising said first volume and said block, with N a positive integer.

2. Method of claim 1, wherein said first predefined orthogonal transform is a two-dimensional discrete cosine transform.

3. Method of claim 1 or 2, wherein the probability of observing said first volume is estimated as follows :

- associate a set of P ordered coefficients to each volume comprising the blocks co-located to one of the block of said current picture in the N pictures preceding said current picture, with P a positive integer, said set of coefficients being generated by transforming said volume by a second predefined orthogonal transform;
- estimate, for each coefficient of order p, its probability distribution, $p \in [1; P]$; and
- compute the probability of observing said first volume as the product of the probabilities of each coefficient of the set associated to said first volume.

**4.** Method of claim 1 or 2, wherein the probability of observing said second volume is estimated as follows:

- associate a set of Q ordered coefficients to each volume comprising one of the block of said current picture and the blocks co-located to said block in the N pictures preceding said current picture, with Q a positive integer, said set of coefficients being generated by transforming said volume by said second predefined orthogonal transform;
- estimate, for each coefficient of order q, its probability distribution, $q \in [1; Q]$; and
- compute the probability of observing said second volume as the product of the probabilities of each coefficient of the set associated to said second volume.

**5.** Method of claim 3 or 4, wherein said second predefined orthogonal transform is a three-dimensional discrete cosine transform.

**6.** Computer program product comprising program code instructions for the execution of the steps of the method of saliency maps computation according to one of claims 1 to 5, when the said program is executed on a computer.

**Patentansprüche**

**1.** Verfahren zum Erzeugen einer Salienzkarte für ein gegenwärtiges Bild einer Folge von Bildern, wobei das gegenwärtige Bild in Blöcke von Pixeln geteilt ist, wobei das Verfahren einen Schritt (10, 20, 30, 40, 50) zum Berechnen eines Salienzwerts für jeden Block des Bilds umfasst, **dadurch gekennzeichnet, dass** der Salienzwert in Übereinstimmung mit der folgenden Gleichung berechnet wird (10, 20, 30, 40, 50):

$$SSS(B(x_0, y_0, t)) = -\log(p(B(x_0, y_0, t)|V(x_0, y_0, t-1)))$$

$- \log (p(B(x_0, y_0, t)|F(t)))$
wobei:

- $SSS(B(x_0, y_0, t))$ der raumzeitliche Salienzwert des gegenwärtigen Blocks $B(x_0, y_0, t)$ ist;
- $p(B(x_0, y_0, t)|V(x_0, y_0, t-1))$ die Wahrscheinlichkeit ist, dass der Block angesichts seines zeitlichen Kontexts $V(x_0, y_0, t-1)$ beachtet wird; und
- $p(B(x0, y_0, t)|(t))$ die Wahrscheinlichkeit ist, dass der Block angesichts seines räumlichen Kontexts $F(t)$ beachtet wird,

wobei die Wahrscheinlichkeit, dass der Block angesichts seines räumlichen Kontexts beachtet wird, wie folgt geschätzt wird (30):
- Zuordnen eines Satzes von K geordneten Koeffizienten zu jedem Block des Bilds, wobei K eine positive ganze Zahl ist, wobei der Satz von Koeffizienten durch Transformieren des Blocks durch eine erste vorgegebene orthogonale Transformation erzeugt wird;
- für jeden Koeffizienten der Ordnung k, Schätzen seiner Wahrscheinlichkeitsverteilung innerhalb des Bilds, $k \in [1; K]$; und
- Berechnen der Wahrscheinlichkeit der Beachtung des Blocks angesichts seines räumlichen Kontexts als das Produkt der Wahrscheinlichkeiten jedes Koeffizienten des dem Block zugeordneten Satzes, und

wobei die Wahrscheinlichkeit, dass der Block angesichts seines zeitlichen Kontexts beachtet wird, auf der Grundlage der Wahrscheinlichkeit der Beachtung eines ersten Volumens, das Blöcke umfasst, die ortsgleich zu dem Block in den N Bildern sind, die dem Bild, in dem sich der Block befindet, das gegenwärtige Bild genannt, vorhergehen, und der Wahrscheinlichkeit der Beachtung eines zweiten Volumens, das das erste Volumen und den Block umfasst, mit N einer positiven ganzen Zahl, geschätzt wird (10).

**2.** Verfahren nach Anspruch 1, bei dem die erste vorgegebene orthogonale Transformation eine zweidimensionale diskrete Kosinustransformation ist.

**3.** Verfahren nach Anspruch 1 oder 2, bei dem die Wahrscheinlichkeit der Beachtung des ersten Volumens wie folgt geschätzt wird:

- Zuordnen eines Satzes von P geordneten Koeffizienten zu jedem Volumen, das die Blöcke umfasst, die ortsgleich zu einem der Blöcke des gegenwärtigen Bilds in den N Bildern, die dem gegenwärtigen Bild vorhergehen, sind, wobei P eine positive ganze Zahl ist, wobei der Satz von Koeffizienten durch Transformieren des Volumens durch eine zweite vorgegebene orthogonale Transformation erzeugt wird;
- für jeden Koeffizienten der Ordnung p, Schätzen seiner Wahrscheinlichkeitsverteilung, $p \in [1; P]$; und
- Berechnen der Wahrscheinlichkeit der Beachtung des ersten Volumens als das Produkt der Wahrscheinlichkeiten jedes Koeffizienten des Satzes, der dem ersten Volumen zugeordnet ist.

**4.** Verfahren nach Anspruch 1 oder 2, bei dem die Wahrscheinlichkeit der Beachtung des zweiten Volumens wie folgt geschätzt wird:

- Zuordnen eines Satzes von Q geordneten Koeffizienten zu jedem Volumen, das einen der Blöcke des gegenwärtigen Bilds umfasst, und der Blöcke, die ortsgleich zu dem Block in den N Bildern, die dem gegenwärtigen Bild vorhergehen, sind, wobei Q eine positive ganze Zahl ist, wobei der Satz von Koeffizienten durch Transformieren des Volumens durch die zweite vorgegebene orthogonale Transformation erzeugt wird;
- für jeden Koeffizienten der Ordnung q, Schätzen seiner Wahrscheinlichkeitsverteilung, $q \in [1; Q]$; und
- Berechnen der Wahrscheinlichkeit der Beachtung des zweiten Volumens als das Produkt der Wahrscheinlichkeiten jedes Koeffizienten des Satzes, der dem zweiten Volumen zugeordnet ist.

**5.** Verfahren nach Anspruch 3 oder 4, bei dem die zweite vorgegebene orthogonale Transformation eine dreidimensionale diskrete Kosinustransformation ist.

**6.** Computerprogrammprodukt, das Programmcodeanweisungen für die Ausführung der Schritte des Verfahrens der Salienzkartenberechnung in Übereinstimmung mit einem der Ansprüche 1 bis 5, wenn das Programm auf einem Computer ausgeführt wird, umfasst.

## Revendications

**1.** Procédé permettant de produire une carte de saillance d'une image courante d'une séquence d'images, ladite image courante étant divisée en blocs de pixels, comprenant une étape (10, 20, 30, 40, 50) pour calculer une valeur de saillance de chaque bloc de ladite image, **caractérisé en ce que** la valeur de saillance est calculée (10, 20, 30, 40, 50) conformément à l'équation suivante :

$$SSS(B(x_o, y_o, t)) = -\log(p(B(x_o, y_o, t) \mid V(x_o, y_o, t\text{-}1))) - \log(p(B(x_o, y_o, t) \mid F(t)))$$

où :

- $SSS(B(x_o y_o t))$ est la valeur spatio-temporelle de saillance du bloc courant $B(x_o, y_o, t)$;
- $p(B(x_o, y_o, t) \mid V(x_o, y_o, t\text{-}1))$ est la probabilité d'observation dudit bloc étant donné son contexte temporel $V(x_o, y_o, t\text{-}1)$; et
- $p(B(x_o, y_o, t) \mid F(t))$ est la probabilité d'observation dudit bloc étant donné son contexte spatial $F(t)$

où la probabilité d'observation dudit bloc étant donné son contexte spatial est estimée (30) comme suit :

- associer à chaque bloc de ladite image un ensemble de K coefficients ordonnés, K étant un entier positif, ledit ensemble de coefficients étant généré en transformant ledit bloc par une première transformée orthogonale prédéfinie ;
- estimer, pour chaque coefficient d'ordre k, sa distribution de probabilité à l'intérieur de ladite image, $k \in [1; K]$ ; et
- calculer la probabilité d'observation dudit bloc étant donné son contexte spatial comme le produit des probabilités de chaque coefficient de l'ensemble associé audit bloc et

où la probabilité d'observation dudit bloc étant donné son contexte temporel est estimée (10) en fonction de la probabilité d'observation d'un premier volume comprenant des blocs co-localisés dudit bloc dans les N images précédant l'image où ledit bloc est localisé, appelée image courante, et de la probabilité d'observation d'un second volume comprenant ledit premier volume et ledit bloc, N étant un entier positif.

2. Procédé selon la revendication 1, où ladite première transformée orthogonale prédéfinie est une transformée en cosinus discrète bidimensionnelle.

3. Procédé selon la revendication 1 ou 2, où la probabilité d'observation dudit premier volume est estimée comme suit :

- associer un ensemble de P coefficients ordonnés à chaque volume comprenant les blocs co-localisés de l'un des blocs de ladite image courante dans les N images précédant ladite image courante, P étant un entier positif, ledit ensemble de coefficients étant généré en transformant ledit volume par une seconde transformée orthogonale prédéfinie ;
- estimer, pour chaque coefficient d'ordre p, sa distribution de probabilité, p ∈ [1; P] ; et
- calculer la probabilité d'observation dudit premier volume comme le produit des probabilités de chaque coefficient de l'ensemble associé audit premier volume.

4. Procédé selon la revendication 1 ou 2, où la probabilité d'observation dudit second volume est estimée comme suit :

- associer un ensemble de Q coefficients ordonnés à chaque volume comprenant l'un des blocs de ladite image courante et les blocs co-localisés dudit bloc dans les N images précédant ladite image courante, Q étant un entier positif, ledit ensemble de coefficients étant généré en transformant ledit volume par ladite seconde transformée orthogonale prédéfinie ;
- estimer, pour chaque coefficient d'ordre q, sa distribution de probabilité, q ∈ [1; Q] ; et
- calculer la probabilité d'observation dudit second volume comme le produit des probabilités de chaque coefficient de l'ensemble associé audit second volume.

5. Procédé selon la revendication 3 ou 4, où ladite seconde transformée orthogonale prédéfinie est une transformée en cosinus discrète tridimensionnelle.

6. Produit de programme informatique comprenant des instructions de code de programme pour l'exécution des étapes du procédé de calcul des cartes de saillance selon une des revendications 1 à 5, lorsque ledit programme est exécuté sur un ordinateur.

$y$

$x$

*time*

$F(t-N+1)$

$B(x,y,t)$

$F(t)$

$B(x,y,t-N+1)$

$V(x,y,t)$

$B(x,y,t)$

$B(x,y,t)$

## FIG. 1

$B(x_0,y_0,t)$

Estimate $p\big(B(x_0,y_0,t)\,|\,V(x_0,y_0,t-1)\big)$ — 10

Estimate $p\big(B(x_0,y_0,t)\,|\,F(t)\big)$ — 30

Compute $SSS_t\big(B(x_0,y_0,t)\big)$ — 20

Compute $SSS_s\big(B(x_0,y_0,t)\big)$ — 40

$+$ $\oplus$ $+$ — 50

$SSS\big(B(x_0,y_0,t)\big)$

## FIG. 2

Fig.3

Fig.4

Fig.5

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004086046 A

**Non-patent literature cited in the description**

- **Itti.** *A principled approach to detecting surprising events in video,* 20 June 2005